# EUROPÄISCHE PATENTSCHRIFT

(11) **EP 3 298 881 B1**
(45) Veröffentlichungstag und Bekanntmachung des Hinweises auf die Patenterteilung: **10.04.2019**
(21) Anmeldenummer: 17153862.2
(22) Anmeldetag: 31.01.2017
(51) Int. Cl.: A01F 15/08

(54) **BALLENPRESSE**
BALING PRESS
PRESSE À BALLES

(30) Priorität: 22.09.2016 DE 102016117867
(43) Veröffentlichungstag der Anmeldung: 28.03.2018
(73) Patentinhaber: Usines Claas France S.A.S, 57140 St. Rémy / Woippy (FR)
(72) Erfinder: Arnould, Cyrille, 57645 Montoy-Flanville (FR)
(74) Vertreter: CLAAS Gruppe

(56) Entgegenhaltungen:
- EP-A1- 1 008 292
- EP-A1- 1 588 604
- EP-A2- 2 243 349
- WO-A1-2015/160242
- US-A- 5 839 362
- US-A1- 2007 289 454
- US-A1- 2012 042 792
- US-A1- 2014 013 970

## Beschreibung

Die Erfindung betrifft eine Ballenpresse gemäß dem Oberbegriff des Anspruches 1.

Ballenpressen, insbesondere Rundballenpressen, werden üblicherweise von einem Zugfahrzeug, beispielsweise einem Traktor, zur Aufnahme von in Form eines Schwads abgelegten Erntegutes über ein Feld gezogen. Das Erntegut wird dabei über eine Aufnahmevorrichtung, eine sogenannte Pickup, aufgenommen und einer nachgeordneten Presskammer zugeführt. In der Presskammer wird das Erntegut verdichtet und zu einem Ballen geformt. Bei einer Rundballenpresse kann die Presskammer einen festen Durchmesser aufweisen oder in Form einer Presskammer mit variablem Durchmesser ausgebildet sein. Eine Festkammerpresse mit einer Presskammer mit festem Durchmesser weist dabei entlang ihres Umfanges feststehende Presswalzen auf. Bei einer Ballenpresse mit einer Presskammer mit einem variablen Durchmesser wird die Presskammer durch ein üblicherweise endlos umlaufendes Pressmittel gebildet und begrenzt. Ein Pressmittel kann beispielsweise in Form eines oder mehrerer endlos und um teilweise verstellbare Rollen umlaufende Pressriemen ausgebildet sein. Ein fertig gepresster Rundballen wird üblicherweise vor einem Auswerfen aus der Presskammer in dieser mit einem Wickelmaterial, beispielsweise Garn oder einem Netz, umhüllt, um den Ballen zu stabilisieren und ein Auseinanderfallen zu vermeiden. Bei Rundballenpressen mit variabler Presskammer wird das Pressmittel häufig über ein oder mehrere an Spannarmen angeordnete Rollen geführt, wobei durch eine Veränderung der Position der Spannarme beispielsweise die Größe der Presskammer und ein auf das Erntegut in der Presskammer wirkender Pressdruck des Pressmittels verändert werden können.

Aus der WO 2015/160242 A1 ist eine Rundballenpresse mit einer variablen Presskammer und einem flexiblen Ballenpressmittel bekannt. Das Ballenpressmittel wird dabei neben ortsfesten Rollen auch über Rollen geführt, die jeweils an zwei verlagerbaren Schwenkarmen angeordnet sind. Die beiden Schwenkarme sind dabei über einen Hydraulikzylinder gekoppelt, wodurch eine Balance zwischen der Veränderung der Größe der Presskammer durch die Bewegung des einen Schwenkarmes und dem wirkenden Pressdruck aufgrund der Bewegung des anderen Schwenkarmes bewirkt werden soll. Nachteilig ist hierbei jedoch, dass eine zuverlässige Steuerung des Pressdruckes nicht möglich ist. Zudem kann eine Veränderung der eingestellten Ballendichte zu einer Störung der Balance zwischen den Schwenkarmen führen, wodurch es beispielsweise zu Deformationen des Ballens kommen kann.

Es ist daher eine Aufgabe der Erfindung, eine Rundballenpresse bereitzustellen, welche eine Steuerung des Pressdruckes und eine verbesserte Prozesssicherheit sowie Erhöhung der Zuverlässigkeit des Ballenpressens ermöglicht.

Diese Aufgabe wird erfindungsgemäß durch eine Rundballenpresse mit den Merkmalen des Anspruches 1 gelöst. Vorteilhafte Ausgestaltungen sind in den abhängigen Ansprüchen wiedergegeben, welche jeweils für sich genommen oder in Kombination miteinander einen Aspekt der Erfindung darstellen können.

Eine Rundballenpresse umfasst eine in einem Gehäuse angeordnete Presskammer zum Pressen von Rundballen aus einem Erntegut, wobei die Presskammer einen variablen Durchmesser aufweist, ein endlos umlaufendes Pressmittel, welches die Presskammer begrenzt, mehrere Rollen zur Führung des Pressmittels, einen gehäuseseitig schwenkbar gelagerten ersten Spannarm, welcher presskammerseitig Rollen zur Führung einer Schlaufe des Pressmittels aufweist, und einen zweiten Spannarm, welcher gehäuseseitig schwenkbar gelagert ist und an einem freien Ende mindestens eine Rolle zur Führung des Pressmittels aufweist. Gemäß der Erfindung ist zumindest ein Pressdruck, mit welchem das Pressmittel zur Formung eines Rundballens wirkt, gemäß einer Steuerfunktion basierend auf einer Größe der Presskammer und einer wirksamen Länge des Pressmittels einstellbar. Durch die Steuerung zumindest des Pressdruckes in Abhängigkeit der Größe der Presskammer und der wirksamen Länge, welche die Presskammer umschließt, des Pressmittels können die Formung eines Ballens in der Presskammer und eine Stabilität des Ballens verbessert werden. Zudem kann eine Dichte des Ballens durch eine Veränderung des Pressdruckes während des Pressens verändert und eine unnötige Verformung des Ballens vermieden werden. Dies bietet den Vorteil, dass die Prozesssicherheit und Zuverlässigkeit des Ballenpressens verbessert werden kann.

Gemäß der Erfindung ist entsprechend der Steuerfunktion eine, insbesondere maximale, Position des zweiten Spannarmes basierend auf einer Position des ersten Spannarmes einstellbar. Das Einstellen einer definierten Position des zweiten Spannarmes abhängig von der Größe der Presskammer und insbesondere einer Größe eines Rundballens, ermöglicht eine verbesserte Steuerung des Pressdruckes, insbesondere dadurch, dass ein maximaler Pressdruck einstellbar ist. Der Pressdruck ist dabei im Wesentlichen durch eine Position des zweiten Spannarmes, und insbesondere durch eine wirksame Länge des Pressmittels, einstellbar. Dies hat den Vorteil, dass eine exakte Einstellung des, insbesondere maximalen, Pressdruckes, ermöglicht wird, wodurch beispielsweise eine Form des Ballens verbessert und damit die Prozesssicherheit verbessert werden kann.

In einer besonders bevorzugten Ausgestaltung der Erfindung ist zur Einstellung zumindest des Pressdruckes eine mechanisch wirkende erste Steuervorrichtung vorgesehen. Durch die mechanisch wirkende erste Steuervorrichtung kann eine zuverlässige und kostengünstige Steuerung des Pressdruckes ermöglicht werden. Die erste Steuervorrichtung ist dabei vorteilhafterweise in Form einer Nockensteuerung ausgebildet, bei der der erste Spannarm und der zweite Spannarm über ein, insbesondere starres, Koppelelement wirkverbunden sind. Die Nockensteuerung bietet die Möglichkeit eine Steuerfunktion zuverlässig und technisch einfach umzusetzen. Dies bietet den Vorteil einer kostengünstigen und zuverlässigen Umsetzung der Steuerung des Pressdruckes entsprechend einer Steuerfunktion.

Vorzugsweise ist das Koppelelement an einem Spannarm festgelegt und ist das an dem anderen Spannarm gemäß der Steuerfunktion ausgebildete Nockenprofil angeordnet, in welchem das Koppelelement zumindest einseitig geführt ist. Das Koppelelement ist starr ausgebildet, wodurch eine unmittelbare Verlagerung des zweiten Spannarmes gemäß der Steuerfunktion gewährleistet werden kann. Durch die zumindest einseitige Führung des Koppelelementes durch das Nockenprofil kann eine maximale Verlagerung des zweiten Spannelementes und damit ein maximaler Pressdruck eingestellt werden. Eine beispielsweise beidseitige Führung des Koppelelementes könnte eine Steuerung eines maximalen und minimalen Pressdruckes und/oder eine genauere Einstellung des Pressdruckes ermöglichen.

In vorteilhafter Weiterbildung der Erfindung ist das Nockenprofil lösbar und/oder austauschbar an dem Spannarm angeordnet. Durch die lösbare Anordnung des Nockenprofils an dem ersten oder zweiten Spannarm kann beispielsweise eine andere Steuerfunktion in die erste Steuervorrichtung implementiert werden. Die hat den Vorteil, dass dadurch eine Anpassung der ersten Steuervorrichtung an veränderte Erntebedingungen und/oder unterschiedliches Erntegut ermöglicht werden kann.

In einer bevorzugten Ausgestaltung der Erfindung ist zur Einstellung zumindest des Pressdruckes eine elektrisch und/oder hydraulisch wirkende zweite Steuervorrichtung vorgesehen. Durch eine elektrisch und/oder hydraulisch wirkende Steuervorrichtung kann beispielweise eine kontinuierliche Steuerung, besonders an sich verändernde Erntebedingungen, ermöglicht werden.

Jeder Aktor kann dabei in Form eines elektrischen Linearantriebes und/oder eines Hydraulikzylinders ausgebildet sein.

In einer bevorzugten Ausgestaltung der Erfindung ist mindestens an dem ersten Spannarm ein Positionssensor angeordnet. Der Positionssensor ermöglicht dabei eine kontinuierliche Erfassung der Position des ersten Spannarmes, wodurch eine Positionierung des zweiten Spannarmes und insbesondere eine Einstellung des Pressdruckes, verbessert werden kann.

Weiterhin ist vorteilhafterweise eine Steuerungseinheit zur, insbesondere kontinuierlichen, Steuerung und Regelung der Steuervorrichtung vorgesehen ist. Die Steuerungseinheit kann dabei mit Positionssensoren und/oder Aktoren verbunden sein, um diese entsprechend eine Steuerfunktion anzusteuern. Die Steuerungseinheit bietet den Vorteil, dass eine kontinuierliche Steuerung ermöglicht werden kann. Zudem können weitere Steuerfunktionen in der Steuerungseinheit hinterlegt und zur Steuerung der Steuervorrichtung, und insbesondere des Pressdruckes, genutzt werden.

Weitere Merkmale der Erfindung ergeben sich aus der nachfolgenden Beschreibung sowie aus den Zeichnungen, in denen ein Ausführungsbeispiel der Erfindung dargestellt und beschrieben ist.

Es zeigen:
- Fig. 1:: eine schematische Seitenansicht einer Ballenpresse;
- Fig. 2:: eine detaillierte Ansicht einer ersten Steuervorrichtung;
- Fig. 3:: eine detaillierte Seitenansicht einer weiteren ersten Steuervorrichtung; und
- Fig. 4:: eine schematische Darstellung einer zweiten Steuervorrichtung.

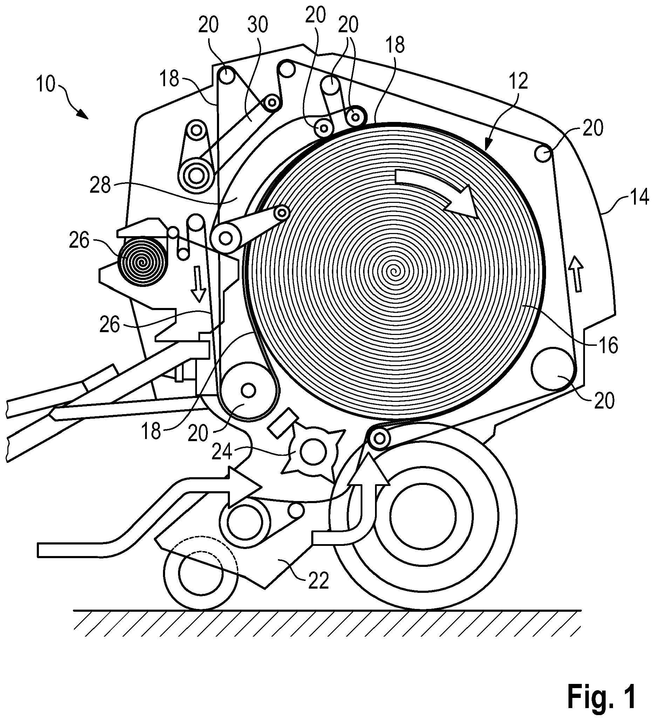

Figur 1 zeigt in einer geschnittenen Seitenansicht eine schematische Darstellung einer Ballenpresse 10 in Form einer Rundballenpresse, welche eine variable Presskammer 12 in einem Gehäuse 14 aufweist. Zum Pressen eines Rundballens 16 weist die Ballenpresse 10 ein endlos umlaufendes Pressmittel 18 auf. Das Pressmittel 18 kann aus einem oder mehreren Pressriemen oder Ketten gebildet werden. Das Pressmittel 18 wird durch eine Mehrzahl an Rollen 20 geführt, wobei die Rollen ortsfest oder variabel angeordnet sein können. Über eine Aufnahmeeinrichtung 22 wird Erntegut aufgenommen, an einem Drehelement in Form eines Rotors 24 entlang geleitet, wobei das Erntegut zerkleinert werden kann, und in die Presskammer 12 eingeleitet, wo das Erntegut verdichtet und zu einem Rundballen 16 gepresst wird. Der Rotor 24 kann dabei in die Presskammer 12 hineinragen und mit einem, beispielsweise im Uhrzeigersinn drehenden Rundballen 16, in Kontakt sein und mit diesem mitdrehen. Ein fertig gepresster Rundballen 16 wird üblicherweise vor einem Auswerfen aus der Presskammer 12 mit einem Wickelmaterial 26, beispielsweise einem Garn oder einem Netz, umwickelt, um den Rundballen 16 zu stabilisieren.

Die Presskammer 12, in der das Erntegut verdichtet wird, wird durch eine wirksame Länge des Pressmittels 18 gebildet. Eine wirksame Länge des Pressmittels 18 ist dabei die Länge des Pressmittels 18, welche die Presskammer 12 umschließt und insbesondere in Kontakt mit einem Rundballen 16 wirkt und eine Presskraft überträgt. Durch eine Verlagerung von Rollen 20 ist die Größe der Presskammer 12 variierbar. Die verlagerbaren Rollen 20 sind dabei jeweils endseitig an einem ersten Spannarm 28 und einem zweiten Spannarm 30 angeordnet. Der erste Spannarm 28 ist dabei gehäuseseitig schwenkbar gelagert und weist an seinem freien Ende zwei Rollen 20 auf, welche eine Schlaufe des Pressmittels 18 führen. Durch eine Veränderung der Position des ersten Spannarmes 28 ist die Größe der Presskammer 12 veränderbar. Durch das weiter in die Presskammer 12 geförderte Erntegut wächst der Rundballen 16 stetig an, wobei der erste Spannarm 28 mit zunehmender Größe der Presskammer 12 und insbesondere zunehmendem Durchmesser des Rundballens 16 ausgelenkt wird. Mit zunehmender Auslenkung des ersten Spannarmes 28 nehmen die Größe der Presskammer 12 und die wirksame Länge des Pressmittels 18 zu. Um einen zu starken Anstieg des Pressdruckes zu vermeiden, wird über eine Verlagerung des zweiten Spannarmes 30, welcher eine Schlaufe des Pressmittels 18 aufspannt, zusätzlich Pressmittel 18 bereitgestellt. Hierfür wird der zweite Spannarm 30 derart verschwenkt, dass die Schlaufe des Pressmittels 18 verringert wird, und die dadurch verfügbare Länge des Pressmittels 18 als wirksame Länge nutzbar ist.

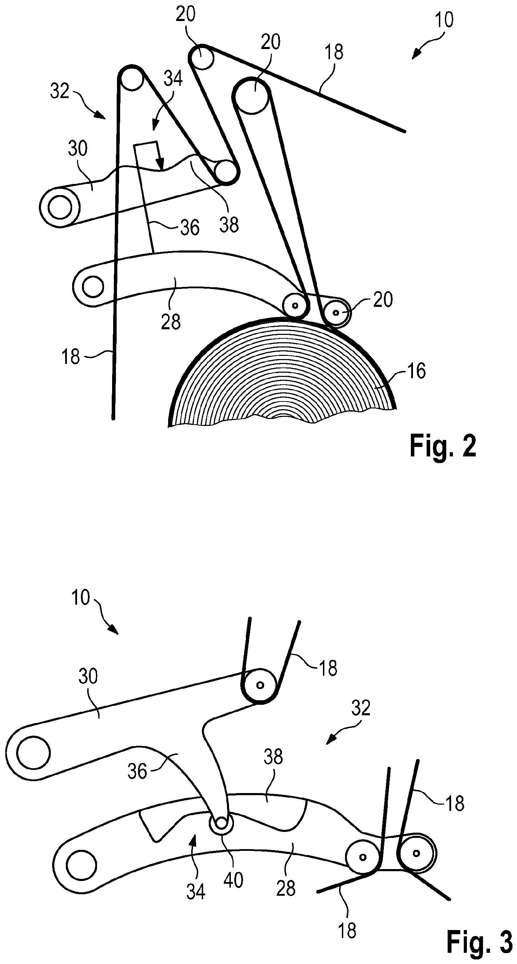

Gemäß der Erfindung ist zumindest der Pressdruck, mit welchem das Pressmittel 18 zur Formung des Rundballens 16 wirkt, gemäß einer Steuerfunktion basierend auf einer Größe der Presskammer und einer wirksamen Länge des Pressmittels einstellbar. Hierfür wird die, insbesondere maximal, Position des zweiten Spannarmes 30 in Abhängigkeit der Position des ersten Spannarmes 28 basierend auf einer Steuerfunktion geändert. Dadurch kann jeweils ein, insbesondere maximaler, Pressdruck eingestellt werden, welcher von dem Pressmittel 18 auf den Rundballen 16 wirkt. In Figur 2 ist eine mechanisch wirkende erste Steuervorrichtung 32 dargestellt, welche in Form einer Nockensteuerung 34 ausgebildet ist. Die erste Steuervorrichtung 32 weist ein Koppelelement 36 auf, welches in dem dargestellten Ausführungsbeispiel mit einem Ende an dem ersten Spannarm 28 festgelegt ist und mit dessen freiem Ende ein Nockenprofil 38 des zweiten Spannarmes 30 kontaktierbar ist. Die Nockensteuerung 34 weist dabei ein entsprechend der Steuerfunktion ausgestaltetes Nockenprofil 38 auf. Durch die Ausgestaltung des Nockenprofils 38 entsprechend der Steuerfunktion kann eine zuverlässige Verlagerung des zweiten Spannarmes 30 basierend auf einer Verlagerung des ersten Spannarmes 28 ermöglicht werden. Bei einer Auslenkung des ersten Spannarmes 28 mit zunehmenden Rundballen 16 wirkt über das Pressmittel 18 an dem freien Ende des zweiten Spannarmes 30 eine Kraft, durch welche der zweite Spannarm 30 von dem ersten Spannarm 28 weg verlagerbar ist. Durch die Ausgestaltung der ersten Steuervorrichtung 32, insbesondere die einseitige Führung der Nockensteuerung 34, erfolgt lediglich eine Begrenzung der maximal zulässigen Verlagerung des zweiten Spannarmes 30. Hierdurch wird ein unerwünschtes Nachgeben des zweiten Spannarmes 30 und damit ein Absinken des Pressdruckes vermieden.

In Figur 3 ist eine weitere Ausgestaltung der ersten Steuervorrichtung 32 dargestellt, wobei das Nockenprofil 38 an dem ersten Spannarm 28 angeordnet ist. Das Koppelelement 34 ist einstückig mit dem zweiten Spannarm 30 ausgebildet. Das Koppelelement 34 weist an seinem freien Ende zum Abtasten des Nockenprofils 38 eine Tastrolle 40 auf. Das Nockenprofil 38 kann lösbar und/oder austauschbar an dem jeweiligen Spannarm 28, 30 angeordnet sein, wodurch unterschiedlich ausgestaltete Nockenprofile 38 einsetzbar sein können. Unterschiedliche Nockenprofile 38 können beispielsweise unterschiedliche Steuerfunktionen abbilden, welche an unterschiedliches Erntegut und/oder unterschiedliche Erntebedingungen angepasst sein können.

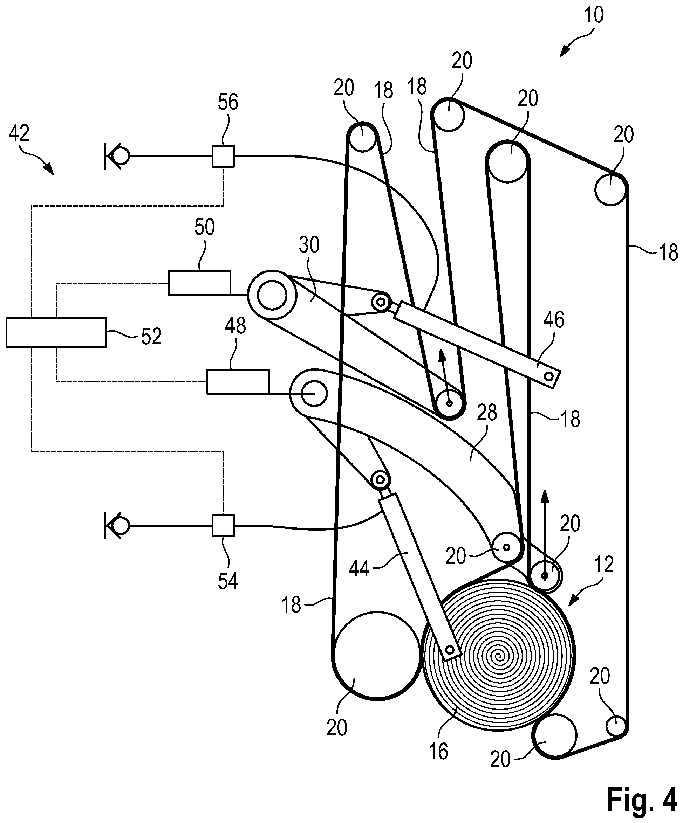

Eine elektrisch und/oder hydraulisch wirkende zweite Steuervorrichtung 42 ist in Figur 4 dargestellt. Hierbei ist dem ersten Spannarm 28 ein erster Aktor 44 und dem zweiten Spannarm 30 ein zweiter Aktor 46 zugeordnet. Die Spannarme 28, 30 sind entkoppelt und unabhängig voneinander mittels der jeweiligen Aktoren 44, 46 in ihrer Position verstellbar ausgebildet. Zu Erfassung der Position des ersten und des zweiten Spannarmes 28, 30 ist an ihrer gehäuseseitigen Lagerung jeweils ein erste Positionssensor 48 und ein zweiter Positionssensor 50 angeordnet. Die Positionssensoren 48, 50 und die Aktoren 44, 46 sind jeweils mit einer Steuerungseinheit 52 verbunden, welche basierend auf einer Position des ersten Spannarmes 28 und einer Steuerfunktion die Position des zweiten Spannarmes 30 steuern kann. Im Kontext der Erfindung ist dabei unter einer Steuerung auch eine Regelung zu verstehen.

Der Rundballen 16 in der Presskammer 12 wächst mit zunehmender Förderung an Erntegut an, wodurch der erste Spannarm 28 ausgelenkt wird und die wirksame Länge des Pressmittels 18 zunimmt. Die Auslenkung des ersten Spannarmes 28 kann durch die Steuerungseinheit 52 über ein erstes Steuerventil 54 geregelt werden, wodurch neben der Ballenform auch der Pressdruck beeinflusst werden kann. Über das Pressmittel 18 wird auch auf das freie Ende des zweiten Spannarmes 30 eine Kraft ausgeübt, welche aufgrund der dargestellten Anordnung der Rollen 20 ein Verschwenken des zweiten Spannarmes 30 weg von dem ersten Spannarm 28 bewirken kann. Da bei einem Verschenken des zweiten Spannarmes 30 die dort gebildete Schlaufe des Pressmittels 18 verkleinert wird, nimmt das Pressmittel 18, welches für die wirksame Länge verfügbar ist, zu. Dadurch kann durch ein Verschwenken des zweiten Spannarmes 30 ebenfalls die Presskraft beeinflusst werden. Die Verlagerung des zweiten Spannarmes 30 ist durch die Steuerungseinheit 52 entsprechend der hinterlegten Steuerfunktion steuerbar. Hierbei ist durch die Steuerungseinheit 52 über ein zweites Steuerventil 56 eine genaue Position des zweiten Spannarmes 30 einstellbar. In der Steuerungseinheit 52 können unterschiedliche Steuerfunktionen, beispielsweise für unterschiedliches Erntegut und/oder Erntebedingungen, abrufbar hinterlegt sein. Eine Steuerung der Position des zweiten Spannarmes 30 kann dabei kontinuierlich erfolgen. Dabei kann die Position des ersten Spannarmes 28 als Führungsgröße für eine Regelung genutzt werden, wobei die Steuerungseinheit 52 eine aus der Steuerfunktion ermittelte Soll-Position des zweiten Spannarmes 30 mit einer IST-Position des Spannarmes 30 vergleichen und gegeben falls eine Anpassung vornehmen.

### Bezugszeichenliste

- 10: Ballenpresse
- 12: Presskammer
- 14: Gehäuse
- 16: Rundballen
- 18: Pressmittel
- 20: Rollen
- 22: Aufnahmevorrichtung
- 24: Rotor
- 26: Wickelmaterial
- 28: erster Spannarm
- 30: zweiter Spannarm
- 32: erste Steuervorrichtung
- 34: Nockensteuerung
- 36: Koppelelement
- 38: Nockenprofil
- 40: Tastrolle
- 42: zweite Steuervorrichtung
- 44: erster Aktor
- 46: zweiter Aktor
- 48: erster Positionssensor
- 50: zweiter Positionssensor
- 52: Steuerungseinheit
- 54: erstes Steuerventil
- 56: zweites Steuerventil

## Patentansprüche

1. Rundballenpresse mit einer in einem Gehäuse (14) angeordneten Presskammer (12) zum Pressen von Rundballen (16) aus einem Erntegut, wobei die Presskammer (12) einen variablen Durchmesser aufweist, einem endlos umlaufenden Pressmittel (18), welches die Presskammer (12) begrenzt, mehreren Rollen (20) zur Führung des Pressmittels (18), einem gehäuseseitig schwenkbar gelagerten ersten Spannarm (28), welcher presskammerseitig Rollen (20) zur Führung einer Schlaufe des Pressmittels (18) aufweist, und einem zweiten Spannarm (30), welcher gehäuseseitig schwenkbar gelagert ist und an einem freien Ende mindestens eine Rolle (20) zur Führung des Pressmittels (18) aufweist,
**dadurch gekennzeichnet, dass** dem ersten Spannarm (28) ein erster Aktor (44) und dem zweiten Spannarm (30) ein zweiter Aktor (46) zugeordnet ist, wobei die Spannarme (28, 30) entkoppelt und unabhängig voneinander mittels der jeweiligen Aktoren (44, 46) in ihrer Position verstellbar ausgebildet sind, und dass zumindest ein Pressdruck, mit welchem das Pressmittel (18) zur Formung eines Rundballens (16) wirkt, gemäß einer Steuerfunktion basierend auf einer Größe der Presskammer (12) und einer wirksamen Länge des Pressmittels (18) eingestellt wird, wobei entsprechend der Steuerfunktion eine, insbesondere maximale, Position des zweiten Spannarmes (30) basierend auf einer Position des ersten Spannarmes (28) einstellbar ist.

2. Ballenpresse nach Anspruch 1, **dadurch gekennzeichnet, dass** zur Einstellung zumindest des Pressdruckes eine mechanisch wirkende erste Steuervorrichtung (32) vorgesehen ist.

3. Ballenpresse nach Anspruch 1 oder 2, **dadurch gekennzeichnet, dass** die erste Steuervorrichtung (32) in Form einer Nockensteuerung (34) ausgebildet ist, bei der der erste Spannarm (28) und der zweite Spannarm (30) über ein, insbesondere starres, Koppelelement (36) wirkverbunden sind.

4. Ballenpresse nach Anspruch 3, **dadurch gekennzeichnet, dass** das Koppelelement (36) an einem Spannarm (28, 30) festgelegt ist und das an dem anderen Spannarm (30, 28) ein gemäß der Steuerfunktion ausgebildetes Nockenprofil (38) angeordnet ist, in welchem das Koppelelement (36) zumindest einseitig geführt ist.

5. Ballenpresse nach Anspruch 4, **dadurch gekennzeichnet, dass** das Nockenprofil (38) lösbar und/oder austauschbar an dem Spannarm (28, 30) angeordnet ist.

6. Ballenpresse nach einem der vorherigen Ansprüche, **dadurch gekennzeichnet, dass** zur Einstellung zumindest des Pressdruckes eine elektrisch und/oder hydraulisch wirkende zweite Steuervorrichtung (42) vorgesehen ist.

7. Ballenpresse nach einem der vorherigen Ansprüche, **dadurch gekennzeichnet, dass** mindestens an dem ersten Spannarm (28) ein Positionssensor (48) angeordnet ist.

8. Ballenpresse nach einem der vorherigen Ansprüche, **dadurch gekennzeichnet, dass** eine Steuerungseinheit (52) zur, insbesondere kontinuierlichen, Steuerung und Regelung der Steuervorrichtung (32, 42) vorgesehen ist.

## Claims

1. A round bale press comprising a pressing chamber (12) arranged in a housing (14) for pressing round bales (16) from a crop material, wherein the pressing chamber (12) is of a variable diameter, an endlessly circulating pressing means (18) which delimits the pressing chamber (12), a plurality of rollers (20) for guiding the pressing means (18), a first clamping arm (28) which is pivotably mounted at the housing side and which has rollers (20) at the pressing chamber side for guiding a loop of the pressing means (18), and a second clamping arm (30) which is mounted pivotably at the housing side and has at least one roller (20) at a free end for guiding the pressing means (18),
**characterised in that** associated with the first clamping arm (28) is a first actuator (44) and associated with the second clamping arm (30) is a second actuator (46), wherein the clamping arms (28, 30) are uncoupled and are displaceable in their position independently of each other by means of the respective actuators (44, 46) and at least a pressing pressure with which the pressing means (18) acts to form a round bale (16) is adjusted in accordance with a control function based on a size of the pressing chamber (12) and an effective length of the pressing means (18), wherein according to the control function an in particular maximum position of the second clamping arm (30) is adjustable based on a position of the first clamping arm (28).

2. A bale press according to claim 1 **characterised in that** a mechanically acting first control device (32) is provided for adjusting at least the pressing pressure.

3. A bale press according to claim 1 or claim 2 **characterised in that** the first control device (32) is in the form of a cam control (34) in which the first clamping arm (28) and the second clamping arm (30) are operatively connected by way of an in particular rigid coupling element (36).

4. A bale press according to claim 3 **characterised in that** the coupling element (36) is fixed on a clamping arm (28, 30) and a cam profile (38) which is formed according to the control function and in which the coupling element (36) is guided at least at one side is arranged on the other clamping arm (30, 28).

5. A bale press according to claim 4 **characterised in that** the cam profile (38) is releasably and/or interchangeably arranged on the clamping arm (28, 30).

6. A bale press according to one of the preceding claims **characterised in that** an electrically and/or hydraulically acting second control device (42) is provided for adjusting at least the pressing pressure.

7. A bale press according to one of the preceding claims **characterised in that** a position sensor (48) is arranged at least on the first clamping arm (28).

8. A bale press according to one of the preceding claims **characterised in that** a control unit (52) is provided for in particular continuous open-loop and closed-loop control of the control device (32, 42).

## Revendications

1. Presse à balles rondes comprenant une chambre de pressage (12) disposée dans un carter (14) pour presser des balles rondes (16) à partir d'un produit de récolte, la chambre de pressage (12) présentant un diamètre variable, comprenant un moyen de pressage à défilement continu (18) qui limite la chambre de pressage (12), comprenant plusieurs rouleaux (20) pour guider le moyen de pressage (18), comprenant un premier bras de tension (28) qui est monté à pivotement côté carter et qui comporte des rouleaux (20) côté chambre de pressage pour guider une boucle du moyen de pressage (18), et comprenant un second bras de tension (30) qui est supporté à pivotement côté carter et qui comporte à une extrémité libre au moins un rouleau (20) pour guider le moyen de pressage (18), **caractérisée en ce qu'**au premier bras de tension (28) est associé un premier actionneur (44) et au second bras de tension (30) est associé un second actionneur (46), les bras de tension (28, 30) étant conçus de façon découplée et avec une possibilité de réglage positionnel indépendamment l'un de l'autre au moyen des actionneurs respectifs (44, 46), et **en ce qu'**au moins une pression de pressage, avec laquelle le moyen de pressage (18) agit pour former une balle ronde (16), est établie conformément à une fonction de commande sur la base d'une grandeur de la chambre de pressage (12) et d'une longueur utile du moyen de pressage (18), une position, en particulier maximale, du second bras de tension (30) pouvant être établie conformément à la fonction de commande sur la base d'une position du premier bras de tension (28).

2. Presse à balles selon la revendication 1, **caractérisée en ce que** pour établir au moins la pression de pressage est prévu un premier dispositif de commande (32) à action mécanique.

3. Presse à balles selon la revendication 1 ou 2, **caractérisée en ce que** le premier dispositif de commande (32) est conçu sous la forme d'une commande par came (34) dans laquelle le premier bras de tension (28) et le second bras de tension (30) sont reliés fonctionnellement par l'intermédiaire d'un élément de couplage (36), en particulier rigide.

4. Presse à balles selon la revendication 3, **caractérisée en ce que** l'élément de couplage (36) est assujetti à un bras de tension (28, 30) et sur l'autre bras de tension (30, 28) est disposé un profil de came (38) qui est conformé selon la fonction de commande et dans lequel l'élément de couplage (36) est guidé au moins d'un côté.

5. Presse à balles selon la revendication 4, **caractérisée en ce que** le profil de came (38) est disposé de façon amovible et/ou échangeable sur le bras de tension (28, 30).

6. Presse à balles selon une des revendications précédentes, **caractérisé en ce que** pour établir au moins la pression de pressage est prévu un second dispositif de commande (42) à action électrique et/ou hydraulique.

7. Presse à balles selon une des revendications précédentes, **caractérisée en ce qu'**au moins sur le premier bras de tension (28) est disposé un capteur de position (48).

8. Presse à balles selon une des revendications précédentes, **caractérisée en ce qu'**une unité de commande (52) est prévue pour la commande et la régulation, en particulier continues, du dispositif de commande (32, 42).
